# EUROPÄISCHE PATENTANMELDUNG

(11) **EP 3 435 057 A1**
(43) Veröffentlichungstag der Anmeldung: **30.01.2019**
(21) Anmeldenummer: 17183767.7
(22) Anmeldetag: 28.07.2017
(51) Int. Cl.: G01M 13/02

(54) **AUFNAHMEVORRICHTUNG ZUR AUFNAHME EINER ANTRIEBSACHSE EINES KRAFTFAHRZEUGS FÜR EINEN PRÜFSTAND**

(71) Anmelder: Siemens Aktiengesellschaft, 80333 München (DE)
(72) Erfinder: Korzuschnik, Michael, 91077 Hetzles (DE)

(57) **Zusammenfassung**

Die Erfindung betrifft eine Aufnahmevorrichtung (6) zur Aufnahme einer Antriebsachse (4) eines Kraftfahrzeugs für einen Prüfstand (2). Um eine, im Vergleich zum Stand der Technik, realistischere Lastverteilung zu erzielen, wird vorgeschlagen, dass die Aufnahmevorrichtung (6) mindestens eine äußere Einheit (18) zur Verbindung mit dem Prüfstand (2) und mindestens eine von der äußeren Einheit (18) zumindest teilweise umschlossene innere Einheit (20) aufweist, wobei die innere Einheit (20) relativ zur äußeren Einheit (18) translatorisch fest und zumindest um eine Achse rotatorisch flexibel ausgestaltet ist und wobei die innere Einheit (20) eine zur Aufnahme der Antriebsachse (4) geeignete Ausnehmung (40) aufweist.

## Beschreibung

Die Erfindung betrifft eine Aufnahmevorrichtung zur Aufnahme einer Antriebsachse eines Kraftfahrzeugs für einen Prüfstand.

Ferner betrifft die Erfindung einen Prüfstand zum Prüfen einer Antriebsachse für ein Kraftfahrzeug mit mindestens einer Antriebsvorrichtung, mindestens einer Belastungsvorrichtung und mindestens einer derartigen Aufnahmevorrichtung.

Die Erfindung betrifft darüber hinaus ein Verfahren zum Prüfen einer Antriebsachse für ein Kraftfahrzeug in einem Prüfstand.

Derartige Antriebsachsen kommen insbesondere in Personenkraftwagen und Nutzfahrzeugen vor. Die Antriebsachse soll zur Durchführung einer Prüfung, beispielsweise zur Ermittlung eines Verschleißes oder einer Lebensdauer, in einem Prüfstand eingebaut werden. Untersuchungen in einem derartigen Prüfstand sind kostengünstiger und zuverlässiger, da das Ergebnis weniger stark von äußeren Bedingungen abhängt. Ferner lassen sich Tests im Prüfstand, im Vergleich zu einer Testfahrt in einem Fahrzeug, leichter reproduzieren. Der Prüfstand soll in der Lage sein, beispielsweise verschiedene Radlasten und Achslasten realistisch nachzubilden. Neben einer statischen und dynamischen Belastung der Achse ist auch eine Aufhängung für eine realistische Lastverteilung erforderlich.

Die Patentschrift EP 0 293 425 B1 beschreibt ein Verfahren zum Prüfen von Antriebsachsen für Kraftfahrzeuge, bei welchem die Antriebsachse, bestehend aus Achsgehäuse, Achsgetriebe und mindestens einer Achswelle, in einen Prüfstand eingespannt, antriebsseitig angetrieben und abtriebsseitig gebremst wird, wobei bei der Prüfung der Gesamtfunktion der Achse, bestehend aus Antriebs- und Tragfunktion, die Achse in angetriebenem Zustand durch von Antrieb und Bremsen unabhängige Zusatzkräfte belastet wird.

Die Offenlegungsschrift DE 3 818 661 A1 beschreibt eine Prüfeinrichtung zur Erprobung komplexer Antriebssysteme, z.B. angetriebener Fahrzeugachsen, bei der von einem Rechner erstellte Lastkollektive über eine Vorrichtung unmittelbar auf die Radköpfe derartiger Fahrzeugachsen aufgegeben werden. Die Vorrichtung beinhaltet ansteuerbare Stellglieder zur Erzeugung von Quer- und Längskräften sowie von Kräftepaaren. Ferner wird die Vorrichtung über einen elektrischen Simulationsantrieb angetrieben. Die ansteuerbaren Stellglieder und der elektrische Simulationsantrieb sind über eine Steuereinrichtung mit dem Rechner untereinander verknüpft, sodass sich ein beliebiges Lastkollektiv erzeugen lässt.

Die Offenlegungsschrift DE 10 2012 101 613 A1 beschreibt einen Prüfstand für Kraftfahrzeuge bzw. Achsen von Kraftfahrzeugen zur Fahrwerksentwicklung, auf welchen zusätzlich Kreiselmomente eines drehenden Rades simuliert werden können. Der Prüfstand weist ein mit zumindest einer Achse des Kraftfahrzeugs verbundenes Radersatzsystem auf, welches eine Radersatzmasse und Mittel zum Antrieb der Radersatzmasse enthält. Der Prüfstand weist ferner eine Anordnung zur Einleitung von Prüfkräften, -momenten und -bewegungen in Längs-, Quer- und/oder Höhenrichtung in das Kraftfahrzeug bzw. die Achsen des Kraftfahrzeugs auf, wobei die Mittel zum Antrieb der Radersatzmasse geeignet sind, die Radersatzmasse in Drehung zu versetzen und die Anordnung zur Einleitung von Prüfkräften, -momenten und -bewegungen geeignet ist, durch Einleitung von Prüfkräften, -momenten und -bewegungen in Längs-, Quer- und/oder Höhenrichtung in das Kraftfahrzeug bzw. die Achsen des Kraftfahrzeugs ein Kreiselmoment der in Drehung versetzten Radersatzmasse zu erzeugen.

Der Erfindung liegt die Aufgabe zugrunde, eine Aufnahmevorrichtung zur Aufnahme einer Antriebsachse eines Kraftfahrzeugs für einen Prüfstand bereitzustellen, mit der eine, im Vergleich zum Stand der Technik, realistischere Lastverteilung erzielt wird.

Diese Aufgabe wird erfindungsgemäß durch eine Aufnahmevorrichtung zur Aufnahme einer Antriebsachse eines Kraftfahrzeugs für einen Prüfstand gelöst, wobei die Aufnahmevorrichtung mindestens eine äußere Einheit zur Verbindung mit dem Prüfstand und mindestens eine von der äußeren Einheit zumindest teilweise umschlossene innere Einheit aufweist, wobei die innere Einheit relativ zur äußeren Einheit translatorisch fest und zumindest um eine Achse rotatorisch flexibel ausgestaltet ist und wobei die innere Einheit eine zur Aufnahme der Antriebsachse geeignete Ausnehmung aufweist.

Darüber hinaus wird die Aufgabe erfindungsgemäß durch einen Prüfstand zum Prüfen einer Antriebsachse für ein Kraftfahrzeug mit mindestens einer Antriebsvorrichtung, mindestens einer Belastungsvorrichtung und mindestens einer derartigen Aufnahmevorrichtung gelöst.

Ferner wird die Aufgabe erfindungsgemäß durch ein Verfahren zum Prüfen einer Antriebsachse für ein Kraftfahrzeug in einem Prüfstand gelöst, wobei die Aufnahmevorrichtung mindestens eine äußere Einheit zur Verbindung mit dem Prüfstand und mindestens eine von der äußeren Einheit zumindest teilweise umschlossene innere Einheit aufweist, wobei die innere Einheit relativ zur äußeren Einheit translatorisch fest und zumindest um eine Achse rotatorisch flexibel angeordnet wird und wobei die Antriebsachse von einer Ausnehmung der inneren Einheit aufgenommen wird.

Die in Bezug auf die Aufnahmevorrichtung nachstehend angeführten Vorteile und bevorzugten Ausgestaltungen lassen sich sinngemäß auf den Prüfstand und das Prüfverfahren übertragen.

Der Erfindung liegt die Überlegung zugrunde, eine Aufnahmevorrichtung für eine Antriebsachse in einem Prüfstand anzugeben, in der die Antriebsachse hinsichtlich ihrer Belastung und Lastverteilung möglichst realistisch aufgenommen ist. Um eine realistische Aufnahme zu gewährleisten, wird die Antriebsachse über eine, insbesondere an den originalen Aufhängepunkten angebrachte, innere Einheit fest und stabil aufgenommen. Die Aufnahme der Antriebsachse erfolgt damit insbesondere wie im Fahrzeug. Die innere Einheit ist von einer äußeren Einheit zumindest teilweise umschlossen, wobei die innere Einheit mit der Antriebsachse relativ zur äußeren Einheit translatorisch fest und zumindest um eine Achse rotatorisch flexibel angeordnet ist, sodass, insbesondere im Bezug auf eine Krafteinprägung und Momenteneinprägung, die gleichen Freiheitsgrade wie im Fahrzeug bestehen. Durch eine derartige Aufnahme der Antriebsachse wird eine realistische Lastverteilung erzielt.

In einer bevorzugten Ausgestaltung weist die innere Einheit eine teilweise kugelförmige Oberfläche auf. Insbesondere weist die innere Einheit eine äquatorialsymmetrisch kugelschichtförmige Oberfläche auf. Eine Kugelschicht, auch Kugelscheibe genannt, ist ein Teil einer Vollkugel, der von zwei parallelen Ebenen ausgeschnitten wird. Bei einer äquatorialsymmetrischen Kugelschicht ist die Fläche der beiden parallelen kreisförmigen Schnittflächen gleich groß. Der runde Bereich der Kugelschicht bildet eine Kontaktfläche zur äußeren Einheit. Durch eine derartige teilweise kugelförmige Oberfläche ist die innere Einheit dreidimensional drehbar und wird durch die äquatorialsymmetrische Ausgestaltung gegenüber Translation unbeweglich.

In einer weiteren bevorzugten Ausführungsform weist die äußere Einheit zumindest im Bereich einer Auflagefläche für die innere Einheit eine zur teilweise kugelförmigen Oberfläche der inneren Einheit korrespondierende Kontaktfläche auf. Eine korrespondierende Kontaktfläche ist insbesondere eine teilweise kugelförmige Aussparung, die im Wesentlichen dem Inversen der teilweise kugelförmigen Oberfläche der inneren Einheit entspricht. Insbesondere durch eine äquatorialsymmetrische Ausgestaltung der korrespondierenden Kontaktfläche ist die innere Einheit von der äußeren Einheit teilweise umschlossen, wobei die innere Einheit relativ zur äußeren Einheit translatorisch fest und rotatorisch flexibel ist.

In einer weiteren vorteilhaften Ausgestaltung sind die teilweise kugelförmige Oberfläche der inneren Einheit und/oder die korrespondierende Kontaktfläche der äußeren Einheit, insbesondere mit einer Molybdän aufweisenden Beschichtung, beschichtet. Zumindest eine der Flächen ist einsatzgehärtet, anschließend manganphosphatiert und mit einem Gleitlack auf Basis Molybdändisulfid beschichtet Alternativ wird eine Molybdänbeschichtung durch Flammspritzen auf zumindest eine der Flächen aufgetragen, wobei die Molybdänbeschichtung aufgrund ihrer metallurgischen Eigenschaften ein sehr gutes Haftvermögen aufweist. Die Schichtdicke der Molybdänbeschichtung liegt zwischen 0,1 mm und 2,0 mm. Eine derartige Beschichtung optimiert das Reibverhalten zwischen der inneren Einheit und der äußeren Einheit.

Besonders vorteilhaft ist die innere Einheit zumindest zweiteilig ausgeführt. Durch eine zweiteilige Ausführung ist die Antriebsachse leicht und schnell montierbar.

In einer weiteren bevorzugten Ausführungsform weist die Belastungsvorrichtung Mittel zur Radnabenlagerung auf, über welche eine Belastungsmaschine mit der Antriebsachse verbindbar ist. Die Mittel zur Radnabenlagerung umfassen insbesondere mindestens eine Lagereinheit durch welche die Antriebsachse realitätsnah mit der Belastungsvorrichtung verbunden ist.

Besonders vorteilhaft umfassen die Mittel zur Radnabenlagerung eine Lagereinheit zur Aufnahme einer axialen Kraft. Die Lagereinheit ist insbesondere axial flexibel an einer Radnabe angebracht. Durch eine derartige Lagereinheit wird eine axialkraftfreie Belastung der Antriebsachse ermöglicht.

In einer weiteren vorteilhaften Ausgestaltung weist die Belastungsvorrichtung mindestens einen Hydraulikzylinder zur Belastung der Antriebsachse mit einer, insbesondere dynamischen, Zusatzkraft auf. Die dynamische Zusatzkraft wird durch Heben und Senken des Hydraulikzylinders erzeugt und wirkt insbesondere radial auf die Antriebsachse. Durch eine derartige radial auf die Antriebsachse wirkende dynamische Zusatzkraft sind beispielsweise Bodenunebenheiten im Prüfstand nachbildbar.

Besonders vorteilhaft weist die Belastungsvorrichtung Druckstangen zur Übertragung einer, insbesondere dynamischen, Zusatzkraft auf. Durch die Druckstangen ist die Kraftrichtung der, insbesondere dynamischen, Zusatzkraft variierbar, was eine realistische Simulation von Fahreigenschaften und Fahrsituationen ermöglicht.

In einer vorteilhaften Ausführungsform weist der Prüfstand einen Schwenkantrieb zur Simulation einer Steigung und/oder eines Gefälles auf. Durch den Schwenkantrieb werden Fahreigenschaften in verschiedenen Fahrsituationen noch realistischer nachgebildet.

In einer weiteren vorteilhaften Ausgestaltung weist der Prüfstand Mittel zur schwingungstechnischen Entkopplung des Prüfstands von einem Fundament auf. Durch eine derartige schwingungstechnische Entkopplung des Prüfstands vom Fundament wird das Ergebnis der Prüfung der Antriebsachse durch Fremdeinwirkung, beispielsweise durch weitere Prüfstände oder durch andere Maschinen, nicht verfälscht. Umgekehrt werden Störungen, die vom Prüfstand ausgehen, nicht an das Fundament übertragen.

Vorteilhaft umfassen die Mittel zur schwingungstechnischen Entkopplung des Prüfstands Federelemente. Die Verwendung von Federelementen ermöglicht eine einfache und kostengünstige Entkopplung des Prüfstands vom Fundament.

Im Folgenden wird die Erfindung anhand der in den Figuren dargestellten Ausführungsbeispiele näher beschrieben und erläutert. Es zeigen:
- FIG 1: eine dreidimensionale Darstellung eines Prüfstands für eine Antriebsachse eines Kraftfahrzeugs,
- FIG 2: eine Schnittdarstellung eines Prüfstands für eine Antriebsachse eines Kraftfahrzeugs im Bereich einer Aufnahmevorrichtung,
- FIG 3: einen dreidimensionalen Ausschnitt eines Prüfstands für eine Antriebsachse eines Kraftfahrzeugs im Bereich einer Aufnahmevorrichtung,
- FIG 4: eine dreidimensionale Darstellung einer inneren Einheit einer Aufnahmevorrichtung und
- FIG 5: einen Querschnitt der Aufnahmevorrichtung mit der Antriebsachse.

Gleiche Bezugszeichen haben in den verschiedenen Figuren die gleiche Bedeutung.

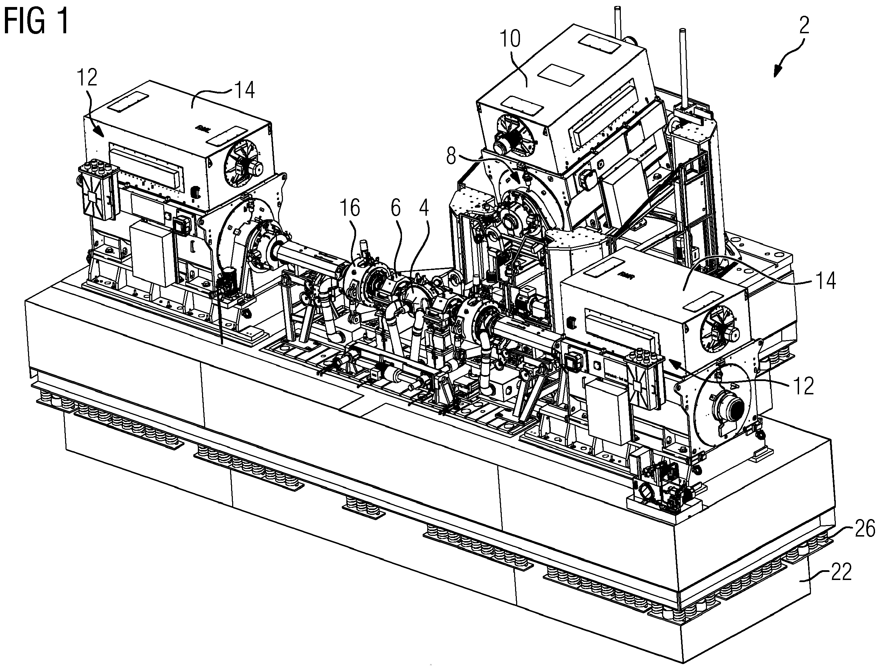

FIG 1 zeigt eine dreidimensionale Darstellung eines Prüfstands 2 für eine Antriebsachse 4 eines Kraftfahrzeugs, wobei die Antriebsachse 4 zur Prüfung in einer Aufnahmevorrichtung 6 angeordnet ist. Die Antriebsachse 4 wird von der Aufnahmevorrichtung 6 an originalen Aufhängepunkten translatorisch fest und rotatorisch flexibel aufgenommen. Die Antriebsachse 4 hat somit in Bezug auf eine Krafteinprägung und Momenteinprägung die gleichen Freiheitsgrade wie im eingebauten Zustand im Fahrzeug.

Die Antriebsachse 4 umfasst ein Achsgehäuse, ein Achsgetriebe und mindestens eine Achswelle. Der Prüfstand 2 umfasst eine Antriebsvorrichtung 8, welche einen Antriebsmotor 10 aufweist. Der Antriebsmotor 10 ist beispielsweise über eine Kardanwelle, welche aus Gründen der Übersichtlichkeit in FIG 1 nicht dargestellt ist, mit dem Achsgetriebe der Antriebsachse 4, das als Differentialgetriebe ausgebildet ist, verbunden. Abtriebsseitig ist die Antriebsachse 4 an beiden Seiten mit einer Belastungsvorrichtung 12 verbunden, wobei die Belastungsvorrichtung 12 an beiden Seiten eine Belastungsmaschine 14 aufweist. Die Belastungsmaschinen 14 sind beispielsweise als elektrische Motoren ausgeführt. Die Antriebsachse 4 ist durch die Belastungsmaschinen 14 sowohl statisch als auch dynamisch, insbesondere oszillierend, sowie auf beiden Seiten unterschiedlich belastbar. Über den Antriebsmotor 10 der Antriebsvorrichtung 8 wird die Antriebsachse 4 antriebsseitig angetrieben und über die Belastungsmaschinen 14 der Belastungsvorrichtung 12 abtriebsseitig gebremst.

Die Belastungsvorrichtung 12 weist beidseitig angeordnete Lagereinheiten 16 auf, die axial flexibel an Radnaben der Antriebsachse 4 angebaut sind. Die Lagereinheiten 16 ermöglichen durch Aufnahme von axialen Kräften eine axialkraftfreie Belastung der Antriebsachse 4.

Durch eine derartige Aufnahme und Belastung der Antriebsachse 4 werden die Biegemomente auf alle Teile der Achse optimal nachgebildet. Mit Hilfe des Prüfstands 2 wird die Antriebsachse 4 unter Berücksichtigung realer Radlasten getestet. Um Fremdeinwirkungen zu minimieren wird der Prüfstand 2 schwingungstechnisch von einem Fundament 22 entkoppelt. Die schwingungstechnische Entkopplung des Prüfstands 2 vom Fundament erfolgt über Federelemente 22.

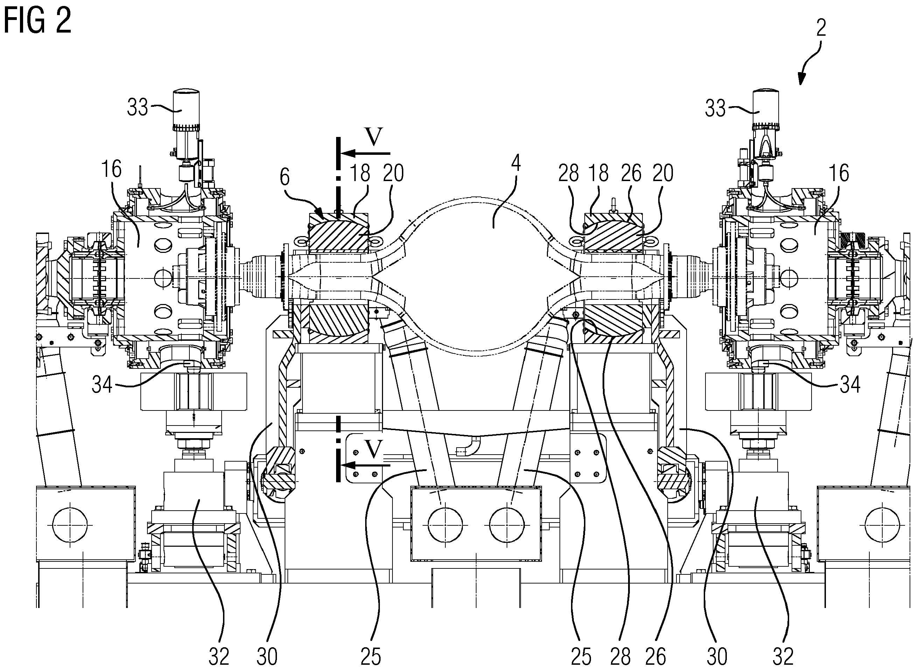

FIG 2 zeigt eine Schnittdarstellung eines Prüfstands 2 für eine Antriebsachse 4 eines Kraftfahrzeugs im Bereich einer Aufnahmevorrichtung 6. Die aufgenommene Antriebsachse 4 wird über Kühlrohre 25 mit einem Kühlmittel, beispielsweise Luft, gekühlt. Das Kühlmittel, welches durch die Kühlrohre 25, beispielsweise über Düsen, auf die Antriebsachse 4 geleitet wird, simuliert insbesondere einen Fahrtwind.

Die Aufnahmevorrichtung 6 der Antriebsachse 4 umfasst auf beiden Seiten des Achsgetriebes jeweils eine äußere Einheit 18 zur Verbindung mit dem Prüfstand 2 und jeweils eine von der äußeren Einheit 18 teilweise umschlossene innere Einheit 20. Die innere Einheit 20 weist eine teilweise kugelförmige Oberfläche 26 auf, wobei die innere Einheit 20 im Bereich einer Wölbung der teilweise kugelförmigen Oberfläche 26 auf der äußeren Einheit 18 aufliegt. Die äußere Einheit 18 weist im Bereich einer Auflagefläche zwischen äußerer Einheit 18 und innerer Einheit 20 eine zur teilweise kugelförmigen Oberfläche 26 der inneren Einheit 20 korrespondierende Kontaktfläche 28 auf. Die innere Einheit 20 ist zweiteilig ausgeführt, wobei die Antriebsachse 4 zumindest formschlüssig mit der inneren Einheit 20 verbunden ist. Die innere Einheit 20 ist durch ihre teilweise kugelförmige Oberfläche 26 translatorisch fest und rotatorisch flexibel in der äußeren Einheit 18 aufgenommen. Darüber hinaus ist beidseitig jeweils ein Schwenkantrieb 30 zur Simulation einer Steigung und/oder eines Gefälles an der Aufnahmevorrichtung 6 des Prüfstands 2 angebracht

Die Antriebsachse 4 ist in einem angetriebenen Zustand durch von Antrieb und Bremsen unabhängige dynamische Zusatzkräfte belastbar, welche beispielsweise Bodenunebenheiten simulieren. Die Zusatzkräfte umfassen insbesondere Vortriebskräfte, welche beispielsweise beim Bremsen und Beschleunigen eines Kraftfahrzeugs auftreten, und Biegemomente, welche beispielsweise bei Kurvenfahrten oder bei einer seitlichen Schräglage des Kraftfahrzeugs auftreten. Die Zusatzkräfte werden hydraulisch über Hydraulikzylinder 32 erzeugt, welche unterhalb der Lagereinheiten 16 angeordnet sind. Die Lagereinheiten 16 werden über automatische Schmiervorrichtungen 33 geschmiert, welche bei Bedarf ein Schmiermittel, insbesondere Fett, über Düsen in die Lagereinheiten drücken. Zumindest ein Teil der Zusatzkräfte wird über Druckstangen 34 übertragen. Die weitere Ausführung des Prüfstandes 2 in FIG 2 entspricht der Ausführung in FIG 1.

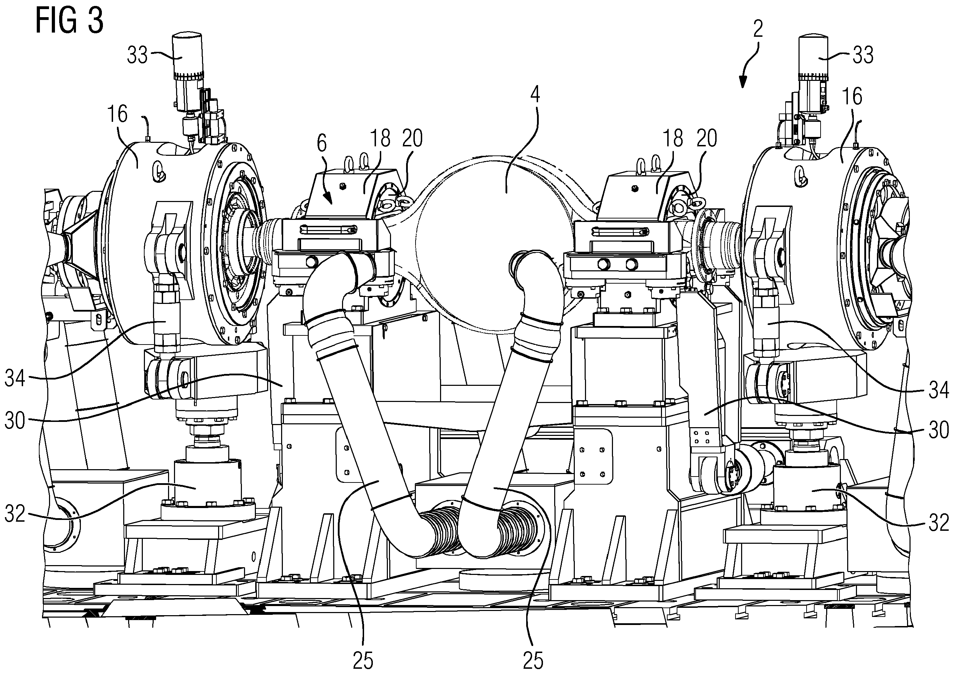

FIG 3 zeigt einen dreidimensionalen Ausschnitt eines Prüfstands 2 für eine Antriebsachse 4 eines Kraftfahrzeugs im Bereich einer Aufnahmevorrichtung 6. Die Ausführung des Prüfstandes 2 in FIG 3 entspricht der Ausführung in FIG 2.

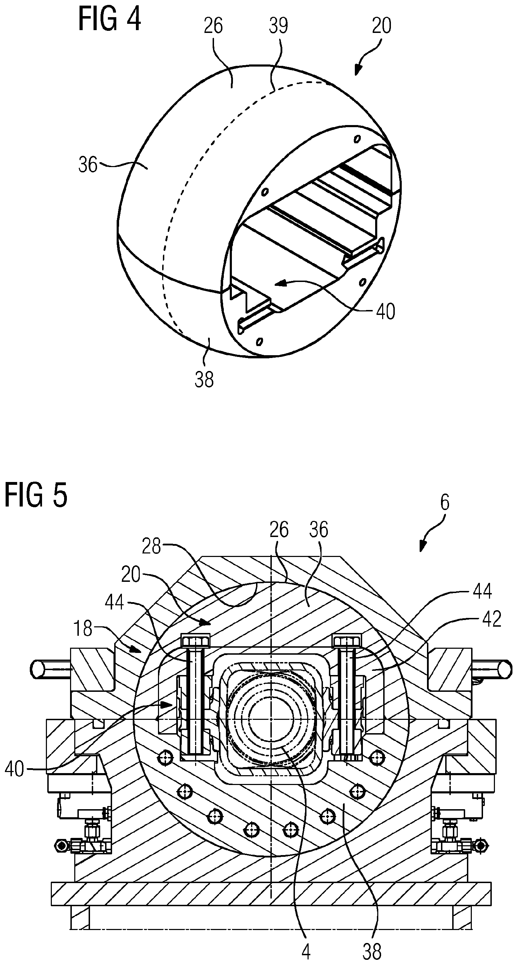

FIG 4 zeigt eine dreidimensionale Darstellung einer inneren Einheit 20 einer Aufnahmevorrichtung 6. Die innere Einheit 20 wird aus Stahl hergestellt und weist eine teilweise kugelförmige Oberfläche 26 auf. Die teilweise kugelförmige Oberfläche 26 der inneren Einheit hat die Form einer zu einem Äquator 39 symmetrischen Kugelschicht und wird deshalb als eine äquatorialsymmetrische Kugelschicht bezeichnet. Der runde Bereich der zum Äquator 39 symmetrischen Kugelschicht ist als Kontaktfläche für die äußere Einheit 18 vorgesehen und ist einsatzgehärtet, anschließend manganphosphatiert und mit einem Gleitlack auf Basis Molybdändisulfid beschichtet, um das Reibverhalten zu optimieren.

Darüber hinaus ist die innere Einheit 20 zweiteilig ausgeführt, wobei der erste Teil 36 und der zweite Teil 38 über Verbindungselemente, beispielsweise Stifte, Schrauben oder Bolzen, zusammengesteckt oder alternativ lösbar miteinander verbunden sind. Darüber hinaus umfasst die innere Einheit 20 eine Ausnehmung 40 zur Aufnahme der Antriebsachse 4, wobei die Antriebsachse 4 durch eine Verbindung der Teile 36, 38 der inneren Einheit 20 befestigt wird.

FIG 5 zeigt einen Querschnitt der Aufnahmevorrichtung 6 mit der Antriebsachse 4, wobei die Antriebsachse 4 über eine Adaptereinheit 42 in der Ausnehmung 40 der in FIG 4 dargestellten inneren Einheit 20 aufgenommen ist. Die Adaptereinheit 42 ist über Verbindungselemente 44, insbesondere Schrauben oder Bolzen, mit den originalen Aufhängepunkten der Antriebsachse 4 verbunden. Die innere Einheit 20, welche mit der Antriebsachse fest verbunden ist, ist in der äußeren Einheit 18 translatorisch fest und rotatorisch flexibel aufgenommen, wobei die beschichtete teilweise kugelförmige Oberfläche 26 der inneren Einheit 20 beweglich auf der korrespondierenden Kontaktfläche 28 der äußeren Einheit 18 gelagert ist. Die korrespondierende Kontaktfläche 28 der äußeren Einheit 18 ist insbesondere ebenfalls einsatzgehärtet, anschließend manganphosphatiert und mit einem Gleitlack auf Basis Molybdändisulfid beschichtet, um das Reibverhalten zu optimieren. Die weitere Ausführung der Aufnahmevorrichtung 6 entspricht der Ausführung in FIG 2.

Zusammenfassend betrifft die Erfindung eine Aufnahmevorrichtung 6 zur Aufnahme einer Antriebsachse 4 eines Kraftfahrzeugs für einen Prüfstand 2. Um eine, im Vergleich zum Stand der Technik, realistischere Lastverteilung zu erzielen, wird vorgeschlagen, dass die Aufnahmevorrichtung 6 mindestens eine äußere Einheit 18 zur Verbindung mit dem Prüfstand 2 und mindestens eine von der äußeren Einheit 18 zumindest teilweise umschlossene innere Einheit 20 aufweist, wobei die innere Einheit 20 relativ zur äußeren Einheit 18 translatorisch fest und zumindest um eine Achse rotatorisch flexibel ausgestaltet ist und wobei die innere Einheit 20 eine zur Aufnahme der Antriebsachse 4 geeignete Ausnehmung 40 aufweist.

## Patentansprüche

1. Aufnahmevorrichtung (6) zur Aufnahme einer Antriebsachse (4) eines Kraftfahrzeugs für einen Prüfstand (2),
wobei die Aufnahmevorrichtung (6) mindestens eine äußere Einheit (18) zur Verbindung mit dem Prüfstand (2) und mindestens eine von der äußeren Einheit (18) zumindest teilweise umschlossene innere Einheit (20) aufweist,
wobei die innere Einheit (20) relativ zur äußeren Einheit (18) translatorisch fest und zumindest um eine Achse rotatorisch flexibel ausgestaltet ist und
wobei die innere Einheit (20) eine zur Aufnahme der Antriebsachse (4) geeignete Ausnehmung (40) aufweist.

2. Aufnahmevorrichtung (6) nach Anspruch 1,
wobei die innere Einheit (20) eine teilweise kugelförmige Oberfläche (26) aufweist.

3. Aufnahmevorrichtung (6) nach Anspruch 2,
wobei die äußere Einheit (18) zumindest im Bereich einer Auflagefläche für die innere Einheit (20) eine zur teilweise kugelförmigen Oberfläche (26) der inneren Einheit (20) korrespondierende Kontaktfläche (28) aufweist.

4. Aufnahmevorrichtung (6) nach einem der Ansprüche 2 oder 3,
wobei die teilweise kugelförmige Oberfläche (26) der inneren Einheit und/oder die korrespondierende Kontaktfläche (28) der äußeren Einheit (18), insbesondere mit einer Molybdän aufweisenden Beschichtung, beschichtet sind.

5. Aufnahmevorrichtung (6) nach einem der vorherigen Ansprüche,
wobei die innere Einheit (20) zumindest zweiteilig ausgeführt ist.

6. Prüfstand (2) zum Prüfen einer Antriebsachse (4) für ein Kraftfahrzeug mit mindestens einer Antriebsvorrichtung (8), mindestens einer Belastungsvorrichtung (12) und mindestens einer Aufnahmevorrichtung (6) nach einem der Ansprüche 1 bis 5.

7. Prüfstand (2) nach Anspruch 6,
wobei die Belastungsvorrichtung (12) Mittel zur Radnabenlagerung aufweist, über welche eine Belastungsmaschine (14) mit der Antriebsachse (4) verbindbar ist.

8. Prüfstand (2) nach einem der Ansprüche 6 oder 7,
wobei die Mittel zur Radnabenlagerung eine Lagereinheit (16) zur Aufnahme einer axialen Kraft umfassen.

9. Prüfstand (2) nach einem der Ansprüche 6 bis 8,
wobei die Belastungsvorrichtung (12) mindestens einen Hydraulikzylinder (32) zur Belastung der Antriebsachse (4) mit einer, insbesondere dynamischen, Zusatzkraft aufweist.

10. Prüfstand (2) nach einem der Ansprüche 6 bis 9,
wobei die Belastungsvorrichtung (12) Druckstangen (34) zur Übertragung einer, insbesondere dynamischen, Zusatzkraft aufweist.

11. Prüfstand (2) nach einem der Ansprüche 6 bis 10, aufweisend einen Schwenkantrieb (30) zur Simulation einer Steigung und/oder eines Gefälles.

12. Prüfstand (2) nach einem der Ansprüche 6 bis 11, aufweisend Mittel zur schwingungstechnischen Entkopplung des Prüfstands (2) von einem Fundament (22).

13. Prüfstand (2) nach Anspruch 12,
wobei die Mittel zur schwingungstechnischen Entkopplung des Prüfstands (22) Federelemente (24) umfassen.

14. Verfahren zum Prüfen einer Antriebsachse (4) für ein Kraftfahrzeug in einem Prüfstand (2),
wobei die Aufnahmevorrichtung (6) mindestens eine äußere Einheit (18) zur Verbindung mit dem Prüfstand (2) und mindestens eine von der äußeren Einheit (18) zumindest teilweise umschlossene innere Einheit (20) aufweist,
wobei die innere Einheit (20) relativ zur äußeren Einheit (18) translatorisch fest und zumindest um eine Achse rotatorisch flexibel angeordnet wird und
wobei die Antriebsachse (4) von einer Ausnehmung (40)der inneren Einheit (20) aufgenommen wird.

15. Verfahren nach Anspruch 14,
wobei die Antriebsachse (4) antriebsseitig angetrieben und abtriebsseitig gebremst wird,
wobei die Antriebsachse (4) in einem angetriebenen Zustand durch eine von Antrieb und Bremsen unabhängige, insbesondere dynamische, Zusatzkraft belastet wird.

16. nach einem der Ansprüche 14 oder 15,
wobei eine, insbesondere dynamische, Zusatzkraft hydraulisch erzeugt wird,

17. Verfahren nach Anspruch 16,
wobei eine hydraulisch erzeugte Zusatzkraft gemessen wird.

18. Verfahren nach einem der Ansprüche 14 bis 17,
wobei eine Zusatzkraft von Druckstangen (34) übertragen wird.

19. Verfahren nach einem der Ansprüche 14 bis 18,
wobei eine axiale Kraft durch mindestens eine Lagereinheit (16) aufgenommen wird.

20. Verfahren nach einem der Ansprüche 14 bis 19,
wobei durch einen Schwenkantrieb eine Steigung und/oder ein Gefälle simuliert werden.

21. Verfahren nach einem der Ansprüche 14 bis 20,
wobei der Prüfstand schwingungstechnisch von einem Fundament entkoppelt wird.
